# FASCICULE DE BREVET EUROPEEN

(11) **EP 3 996 989 B1**
(45) Date de publication et mention de la délivrance du brevet: **30.08.2023**
(21) Numéro de dépôt: 20747069.1
(22) Date de dépôt: 02.07.2020
(51) Int. Cl.: B64C 11/02, B64C 27/30, B64C 27/12, B64D 35/00, F16D 1/112, B64U 50/13, B64U 30/291

(54) **DOIGT DE VERROUILLAGE D'UN ARBRE DE MOTEUR ÉLECTRIQUE**
VERRIEGELUNGSFINGER FÜR EINE ELEKTRISCHE MOTORWELLE
LOCKING FINGER FOR AN ELECTRIC MOTOR SHAFT

(30) Priorité: 09.07.2019 FR 1907650
(43) Date de publication de la demande: 18.05.2022
(73) Titulaire: Safran Electrical & Power, 31702 Blagnac (FR)
(72) Inventeur: ECHE, Jacques, 31702 BLAGNAC (FR); TONDRIAUX, Yann, 31702 BLAGNAC (FR)
(74) Mandataire: Cabinet Beau de Loménie
(86) Numéro de dépôt international: PCT/FR2020/051168
(87) Numéro de publication internationale: WO 2021/005288

(56) Documents cités:
- CN-A- 105 564 634
- US-A1- 2003 034 420
- US-A1- 2019 193 834
- US-B1- 9 783 288

## Description

### Domaine Technique

Le présent exposé concerne le domaine des systèmes de verrouillage des arbres dans le domaine de l'aviation, et concerne plus précisément le verrouillage d'un arbre pour une hélice d'un aéronef.

### Technique antérieure

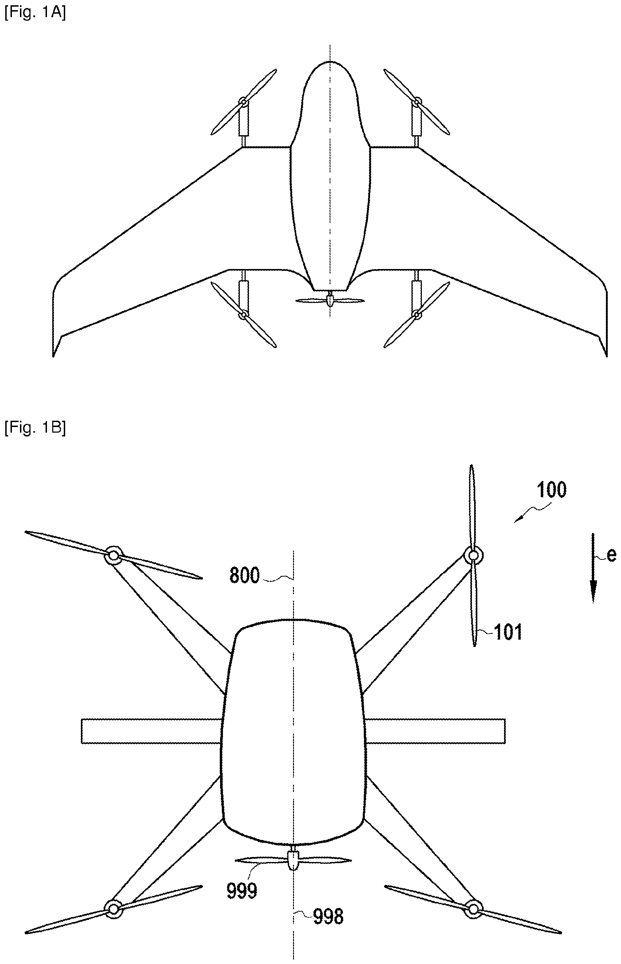

Des aéronefs à décollage vertical sont connus, comprenant une ou plusieurs hélices pour effectuer une phase de vol sensiblement vertical et un moyen de propulsion pour effectuer une phase de vol sensiblement transversal. Ainsi, de tels aéronefs sont adaptés pour décoller et/ou atterrir verticalement (ce qui permet de s'affranchir des longues pistes de décollage/atterrissage) tout en gardant une capacité de croisière comparable à un avion traditionnel. On voit un tel aéronef en figure 1A.

Lorsqu'un tel aéronef effectue une phase de vol autre que verticale, cela tend à générer un écoulement d'air selon une direction qui est sensiblement perpendiculaire à un axe de rotation de l'une des hélices de l'aéronef. Par exemple, lors d'une phase de croisière, l'écoulement peut être sensiblement perpendiculaire à l'axe de rotation de l'une des hélices utilisées lors des phases de décollage et/ou atterrissage.

Cet écoulement peut engendrer une rotation de l'hélice. On parle de rotation libre de l'hélice (ou de « windmilling » depuis l'anglais) lorsque l'hélice n'est pas entrainée par un moteur. De ce fait des forces variables peuvent être transmises par l'hélice à l'aéronef, ce qui risque de perturber la stabilité de l'aéronef, notamment lorsque ces variations sont imprévisibles et/ou non-homogènes d'un moteur (ou hélice) à un autre.

Par ailleurs, cette rotation risque d'augmenter la trainée aérodynamique de l'aéronef, ce qui nuit à l'efficacité énergétique de l'aéronef.

Pour pallier à ces problèmes, il est connu de verrouiller l'hélice en y appliquant un couple moteur. La consommation énergétique engendrée par l'application de ce couple nuit à l'efficacité énergétique de l'aéronef en vol. US9783288 B1 divulgue un mécanisme de verrouillage de position d'une hélice. Dans divers modes de réalisation, un mécanisme de verrouillage de position comprend une structure annulaire ayant une première surface, la structure annulaire comprenant un ou plusieurs crans définis dans la première surface de la structure annulaire. Pour chaque détente, le mécanisme de verrouillage comprend un aimant fixe couplé de manière fixe à la structure annulaire à un emplacement adjacent à la détente. US2003034420 A1 divulgue un aéronef et un dispositif d'entraînement pour aéronef, en particulier pour patins de roulement, comportant une hélice qui est entraînée par un moteur, de préférence par un moteur électrique.

### Exposé de l'invention

Le présent exposé vise ainsi à répondre au moins partiellement à ces problématiques, et propose ainsi un aéronef comprenant une hélice primaire entrainée en rotation par un moteur, le moteur présentant un premier ensemble et un second ensemble mobiles en rotation l'un par rapport à l'autre selon un axe de rotation, l'hélice primaire étant solidaire en rotation de l'un desdits premier ensemble et second ensemble, ledit aéronef comprenant un système de verrouillage, comprenant un logement et un élément d'indexation, le logement étant formé dans l'un parmi le premier ensemble et le second ensemble, l'élément d'indexation étant solidaire de l'autre parmi le premier ensemble et le second ensemble, le système de verrouillage présentant une configuration engagée dans laquelle l'élément d'indexation est au moins partiellement inséré dans le logement, et une configuration libre dans laquelle l'élément d'indexation n'est pas au moins partiellement inséré dans le logement, le système de verrouillage étant configuré de manière à ce qu'en configuration engagée, le mouvement de rotation du premier ensemble par rapport au second ensemble soit limité à un secteur angulaire prédéterminé, par exemple inférieur à 5° ou par exemple inférieur à 1 °, le système de verrouillage étant configuré de manière à passer de la configuration engagée à la configuration libre lorsque le moteur applique un couple de rotation supérieur à une valeur seuil de couple sur le premier ensemble ou sur le second ensemble, caractérisé en ce que le premier ensemble et le second ensemble sont mobiles en translation l'un par rapport à l'autre selon une direction de translation définie par l'axe de rotation, entre une position de repos et une position de service, et en ce que en ce que le système de verrouillage ne peut être en configuration engagée que lorsque le premier ensemble et le second ensemble sont en position de repos.

Selon un exemple, l'élément d'indexation comprend un élément roulant apte à être introduit dans le logement.

Selon un exemple, l'aéronef est configuré pour qu'une poussée, générée lors d'un entrainement de l'hélice primaire par le moteur, s'oppose à un passage du premier ensemble et du second ensemble depuis la position de service vers la position de repos.

Selon un exemple, le système de verrouillage comprend un dispositif de rappel tendant à insérer l'élément d'indexation dans le logement lorsque les premier ensemble et second ensemble sont en position de repos.

Selon un exemple, le dispositif de rappel comprend un ressort d'appui pour pousser l'un de l'élément d'indexation et du logement vers l'autre, et une vis de calibration en coopération avec le ressort d'appui pour modifier une raideur du dispositif de rappel.

Selon un exemple, l'élément d'indexation est inséré dans le logement selon une direction d'insertion qui est sensiblement perpendiculaire à l'axe de rotation, et le dispositif de rappel tend à insérer l'élément d'indexation dans le logement lorsque les premier ensemble et second ensemble sont en position de repos.

Selon un exemple, l'élément d'indexation est inséré dans le logement selon une direction d'insertion qui est parallèle ou sensiblement parallèle à l'axe de rotation, et les premier ensemble et second ensemble quittent la position de repos lorsque le système de verrouillage quitte la configuration engagée.

Selon un exemple, le système de verrouillage comprend plusieurs logements.

Selon un exemple, le système de verrouillage comprend un nombre de logements égal à un nombre de pales de l'hélice primaire.

Selon un exemple, le système de verrouillage comprend un nombre d'éléments d'indexation inférieur à un nombre de pales de l'hélice primaire.

L'aéronef proposé peut ainsi s'affranchir de l'instabilité et/ou inefficacité énergétique touchant aux aéronefs connus, puisque son verrouillage et son déverrouillage de l'hélice primaire peuvent être réalisés passivement.

### Brève description des dessins

[Fig. 1A] La figure 1A est un aéronef connu.
[Fig. 1B] La figure 1B est un aéronef selon le présent exposé.
[Fig. 1C] La figure 1C représente un moteur, une hélice primaire et un système de verrouillage selon une première configuration.
[Fig. 1D] La figure 1D représente un moteur, une hélice primaire et un système de verrouillage selon une deuxième configuration.
[Fig. 2A-2B] Les figures 2A-2B représentent une hélice primaire, un système de verrouillage pour la configuration visible en figure 1C et un moteur dont un premier ensemble et un second ensemble sont respectivement dans une première position (Fig. 2A) et une deuxième position (Fig. 2B).
[Fig. 2C-2D] Les figures 2C-2D représentent une hélice primaire, un système de verrouillage pour la configuration visible en figure 1D et un moteur dont un premier ensemble et un second ensemble sont respectivement dans une première position (Fig. 2C) et une deuxième position (Fig. 2D).
[Fig. 3A-3B] Les figures 3A-3B représentent respectivement le système de verrouillage visible en figures 2A-2D (Fig. 3A) et une variante de ceci avec un composant alternatif (Fig. 3B).
[Fig. 4A-4B] Les figures 4A-4B représentent une hélice primaire, un système de verrouillage pour la configuration visible en figure 1C et un moteur, dont le premier ensemble et le second ensemble sont respectivement dans la première position (Fig. 4A) et la deuxième position (Fig. 4B).
[Fig. 4C] La figure 4C représente une hélice primaire, un système de verrouillage pour la configuration visible en figure 1D et un moteur, dont le premier ensemble et le second ensemble sont dans la deuxième position.
[Fig. 5] La figure 5 représente une hélice primaire, un système de verrouillage, et un moteur, dont le premier et le second ensemble sont dans la deuxième position.

### Description des modes de réalisation

On voit en figure 1B un aéronef selon le présent exposé, lors d'un déplacement sensiblement perpendiculaire à un axe de rotation d'une hélice primaire 100 de l'aéronef. Ce déplacement peut tendre à générer un écoulement d'air selon une direction « e » qui est sensiblement perpendiculaire à l'axe de rotation de l'hélice primaire 100 de l'aéronef. L'aéronef peut comprendre une ou plusieurs hélices primaires 100. Par exemple, l'aéronef représenté en figure 1B en comprend quatre.

A titre d'exemple, l'aéronef peut comprendre un moyen de poussée transversal pour déplacer l'aéronef sensiblement perpendiculairement à l'axe de rotation de l'hélice primaire 100. Le moyen de poussé transversal peut comprendre, par exemple, une hélice secondaire 999 dont l'axe de rotation 998 est sensiblement perpendiculaire à celui de l'hélice primaire 100, comme on le voit en figure 1B.

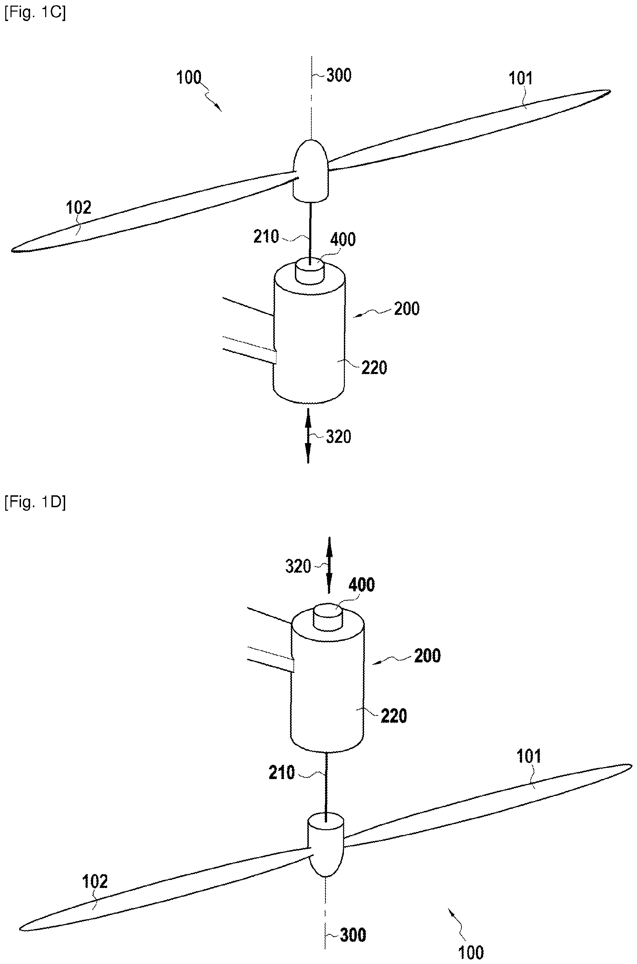

Un aéronef selon le présent exposé peut être configuré pour planer dans une direction sensiblement perpendiculaire à l'axe de rotation de l'hélice primaire 100 lorsque l'hélice primaire 100 n'est pas entraînée par un moteur 200 visible notamment sur les figures 1C et 1D. Dans ce cas de figure, l'aéronef peut ne pas comprendre le moyen de poussée transversal.

Selon un exemple, le moteur 200 peut être un moteur électrique.

Comme on le voit en figure 1C, le moteur 200 présente un premier ensemble 210 et un second ensemble 220 qui sont mobiles en rotation l'un par rapport à l'autre selon un axe de rotation 300. L'hélice primaire 100 peut être solidaire en rotation de l'un desdits premier ensemble 210 et second ensembles 220.

Par exemple, le second ensemble 220 comprend un stator du moteur 200, et le premier ensemble 210 comprend un rotor du moteur 200. Le stator comprend, par exemple, un carter du moteur 200 et le rotor comprend, par exemple, un arbre rotatif de l'hélice primaire 100. L'axe de rotation 300 peut être coïncident ou sensiblement coïncident avec l'arbre de l'hélice primaire 100.

De manière générale, le premier ensemble 210 et le second ensemble 220 sont mobiles en translation l'un par rapport à l'autre selon une direction de translation 320 entre une position de repos et une position de service. Cette translation peut être engendrée, par exemple, par la génération d'une poussée par l'hélice primaire 100, ou par l'arrêt de cette génération de poussée. La direction de translation 320 peut par exemple coïncider avec l'axe de rotation 300. A titre d'exemple, la position de repos est la position du rotor (ou de l'arbre de l'hélice primaire 100) par rapport au stator (ou par rapport au carter) adoptée en absence de poussée par l'hélice primaire 100, et la position de service est la position du rotor (ou de l'arbre de l'hélice primaire 100) par rapport au stator (ou par rapport au carter) adoptée lors de la génération de la poussée par l'hélice primaire 100.

Le mouvement en translation des premier 210 et second 220 ensembles définit une course en translation des premier 210 et second 220 ensembles qui peut être de l'ordre de 2 mm ou plus, ou comprise entre 2 et 8 mm. Selon un exemple, la course correspond au jeu axial du moteur 200. De manière générale, la course en translation peut être prédéfinie en fonction du besoin.

De manière générale, lorsque le moteur 200 entraine l'hélice primaire 100, l'hélice primaire 100 génère une poussée tendant à faire rapprocher l'hélice primaire 100 du moteur 200 (ou à l'aéronef) ou à écarter l'hélice primaire 100 du moteur 200 (ou de l'aéronef). Lorsque la poussée tend à écarter l'hélice primaire 100 du moteur 200 (ou de l'aéronef) on parle d'une configuration « traction » ; lorsque la poussée tend à les rapprocher, on parle d'une configuration « propulsion ».

L'aéronef comprend un système de verrouillage 400, qui peut être disposé entre le moteur 200 et l'hélice primaire 100 lorsque le moteur 200 et l'hélice primaire 100 coopèrent en configuration de traction. Comme on le voit en figure 1D, le moteur 200 peut être disposé entre le système de verrouillage 400 et l'hélice primaire 100 lorsque le moteur 200 et l'hélice primaire 100 coopèrent en configuration de propulsion.

De manière générale, le système de verrouillage 400 présente une configuration engagée et une configuration libre. Dans la configuration engagée, le mouvement de rotation du premier ensemble 210 par rapport au second ensemble 220 peut être limité à un secteur angulaire inférieur à 5°. Plus particulièrement, le mouvement de rotationdu premier ensemble 210 par rapport au second ensemble 220 peut être limité, après ajustement et calibrage, à un secteur angulaire inférieur à 1 °. Ainsi, il est possible de définir les forces appliquées à l'aéronef par l'hélice primaire 100 à un ensemble de valeurs ou plages de valeurs prédéfinies, et/ou de réduire la variabilité de ces forces au minimum. Lorsque le premier ensemble 210 et le second ensemble 220 sont en position de repos, le système de verrouillage 400 peut passer à la configuration engagée. Lorsque le premier ensemble 210 et le second ensemble 220 sont en position de service, le système de verrouillage 400 ne peut passer dans la configuration engagée.

De manière générale, l'aéronef peut être configuré de sorte qu'une poussée générée lors d'un entrainement de l'hélice primaire 100 par le moteur 200 s'oppose à un passage du premier ensemble 210 et du second ensemble 220 depuis la position de service vers la position de repos. Ainsi, cette poussée peut s'opposer au passage du système de verrouillage 400 en configuration engagée.

Le système de verrouillage 400 peut passer de la configuration engagée à la configuration libre lorsque le moteur 200 applique un couple de rotation supérieur à une valeur seuil de couple sur le premier ensemble 210 ou sur le second ensemble 220. Ce couple de rotation peut être un couple de démarrage, par exemple.

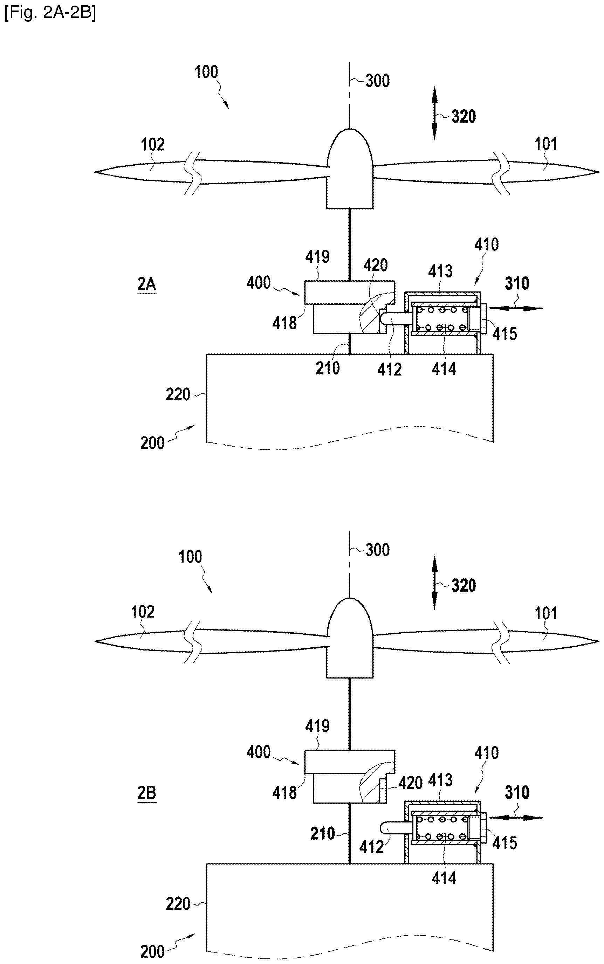

Comme on le voit en figure 2A, le système de verrouillage 400 comprend, de manière générale, un logement 420 et un élément d'indexation 410. Une forme du logement 420 peut correspondre sensiblement à une forme de l'élément d'indexation 410.

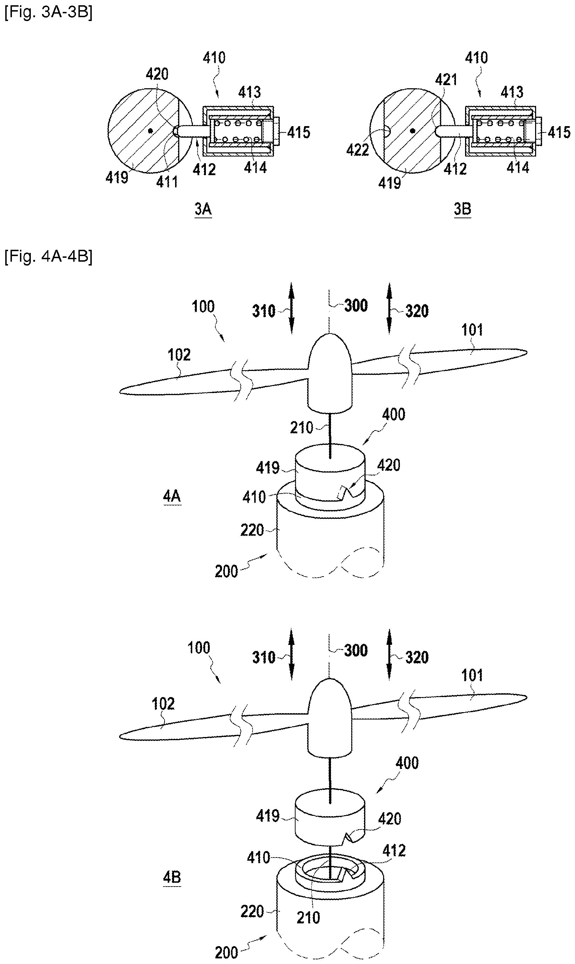

Par exemple, en figure 3A, le logement 420 présente une surface de fond concave, qui est ici semi-circulaire (par exemple, une surface sensiblement sphérique/hémisphérique ou une surface sensiblement cylindrique/hémicylindrique) avec un rayon supérieur à celui d'une surface convexe correspondante de l'élément d'indexation 410. Lorsque la surface concave du logement 420 est sensiblement hémicylindrique ou cylindrique, la surface convexe correspondante de l'élément d'indexation 410 peut être sensiblement sphérique/hémisphérique ou sensiblement cylindrique/hémicylindrique. Lorsque la surface concave du logement 420 est sphérique ou hémisphérique, la surface convexe correspondante de l'élément d'indexation 410 peut être sphérique ou hémisphérique.

La surface de fond du logement 420 peut être reliée à la surface circonférentielle de la pièce cylindrique 419 par une surface tronconique ou des surfaces plates, ou peut rejoindre la surface circonférentielle de la pièce cylindrique 419 directement.

Par exemple, en figure 4B, l'élément d'indexation 410 est un ergot, et le logement 420 est une encoche ayant une forme complémentaire à celle de l'ergot et dans laquelle vient s'engager tout ou partie de l'ergot.

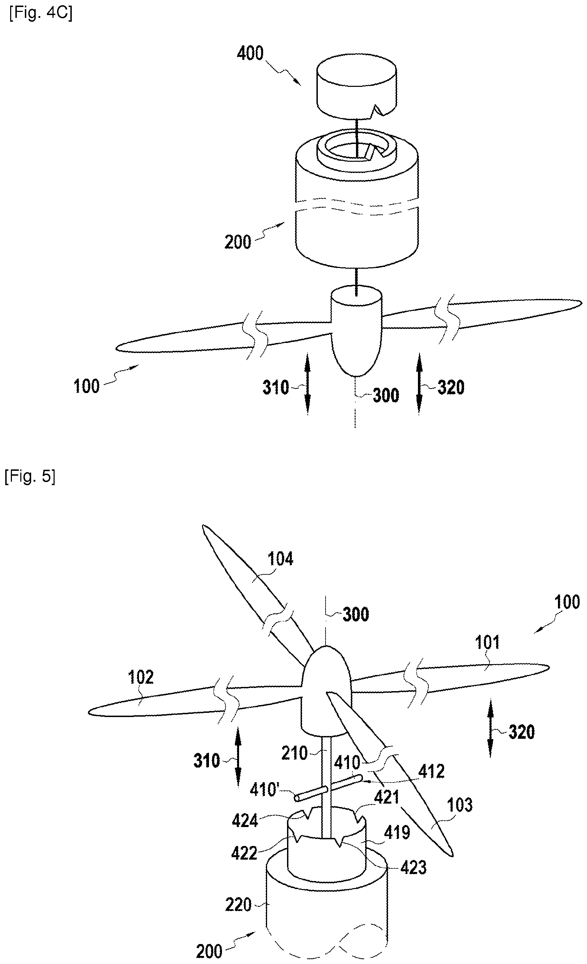

Par exemple en figure 5, l'élément d'indexation 410 est une tige et le logement 421 est une encoche dans laquelle vient se loger la tige.

De manière générale, le logement 420 peut être formé sur ou dans l'un parmi le premier ensemble 210 et le second ensemble 220, et l'élément d'indexation 410 peut être solidaire de ou formé sur l'autre parmi le premier ensemble 210 et le second ensemble 220.

Par exemple, en figure 5, le logement 421 est formé sur ou dans le second ensemble 220, et l'élément d'indexation 410 est solidaire du premier ensemble 210. En figure 2A, le logement 420 est formé sur ou dans le premier ensemble 210, et l'élément d'indexation 410 est solidaire au second ensemble 220.

De manière générale, dans la configuration engagée, au moins une partie de l'élément d'indexation 410 est insérée dans le logement 420. A l'inverse, dans la configuration libre, l'élément d'indexation 410 n'est pas au moins partiellement inséré dans le logement 420, comme on le voit en figure 2B.

De manière générale, le logement 420 et l'élément d'indexation 410 sont écartés l'un de l'autre selon la direction de translation 320 lorsque le premier ensemble 210 et le second ensemble 220 sont en position de service. Comme on le voit en figure 2A, le logement 420 et l'élément d'indexation 410 sont rapprochés l'un à l'autre selon la direction de translation 320 lorsque le premier ensemble 210 et le second ensemble 220 sont en position de repos.

De manière générale, comme on le voit en figures 2A-2D, on peut considérer un système de verrouillage 400 comme configuré pour une configuration de traction lorsqu'un écartement du logement 420 de l'élément d'indexation 410 est engendré par un écartement de l'hélice primaire 100 du moteur 200, et on peut considérer le système de verrouillage 400 comme configuré pour une configuration de propulsion lorsque l'écartement du logement 420 et de l'élément d'indexation 410 est engendré par un rapprochement de l'hélice primaire 100 au moteur 200.

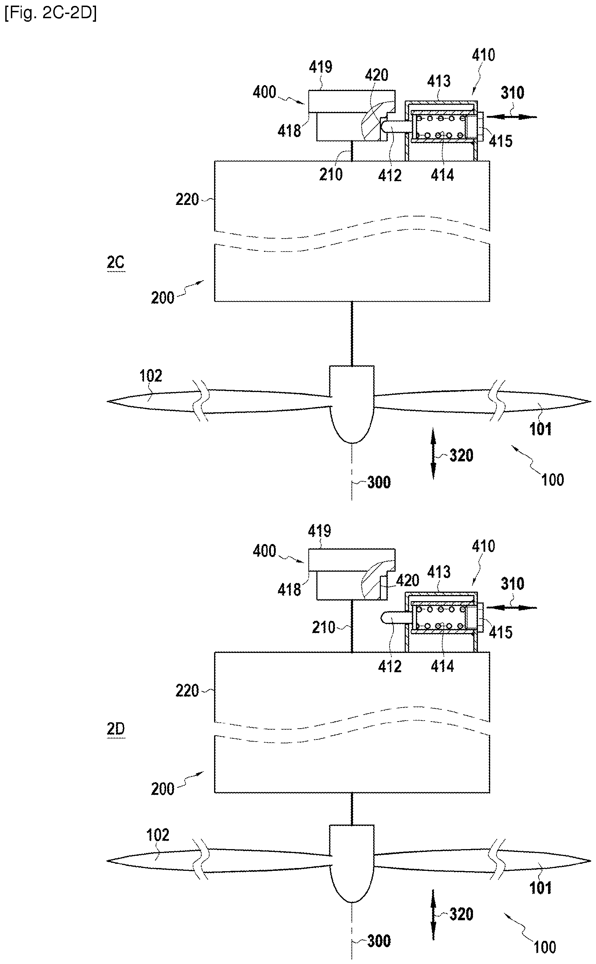

Comme on le voit en figures 2A-2B, dans la configuration de traction, la translation de l'hélice primaire 100 en écartement par rapport au moteur 200 (ou à l'aéronef) peut aussi écarter le logement 420 de l'élément d'indexation 410 en faisant passer le premier ensemble 210 et le second ensemble 220 du moteur 200 à la position de service. Comme on le voit en figures 2C-2D, dans la configuration de propulsion, la translation de l'hélice primaire 100 selon un rapprochement par rapport au moteur 200 (ou à l'aéronef) peut écarter le logement 420 de l'élément d'indexation 410 (ou inversement) en faisant passer le premier ensemble 210 et le second ensemble 220 du moteur 200 à la position de service.

Lorsque le moteur 200 et l'hélice primaire 100 coopèrent dans les deux configurations, les deux dispositions du moteur 200 et du système de verrouillage 400 par rapport à l'hélice primaire 100 sont possibles. De manière générale, le système de verrouillage 400, configuré pour une configuration de traction, peut être reconfiguré pour une configuration de propulsion (ou inversement) en inversant l'orientation du logement 420 et de l'élément d'indexation 410 sur la direction de translation 320. Ainsi, la translation de l'hélice primaire 100 en écartement par rapport au moteur 200 (ou à l'aéronef) peut écarter le logement 420 de l'élément d'indexation 410 dans un premier sens selon la direction de translation 320 lors d'une configuration de traction, et la translation de l'hélice primaire 100 en rapprochement par rapport au moteur 200 (ou à l'aéronef) peut écarter le logement 420 de l'élément d'indexation 410 selon un deuxième sens selon la direction de translation 320, opposé au premier sens, lors d'une configuration de propulsion. Cette possibilité sera détaillée plus tard à l'aide des figures 2A-2D et 4A-5.

Comme on le voit en figure 3A, l'élément d'indexation 410 peut comprendre un élément roulant 411 qui est apte à être introduit dans le logement 420. L'élément roulant 411 peut être disposé sur une extrémité libre 412 de l'élément d'indexation 410. L'élément roulant 411 peut être réalisé comme un galet.

Comme on le voit en figure 2A, le système de verrouillage 400 peut comprendre un dispositif de rappel 413 tendant à insérer l'élément d'indexation 410 dans le logement 420 lorsque le premier ensemble 210 et le second ensemble 220 sont en position de repos.

Le dispositif de rappel peut comprendre un ressort d'appui 414 pour pousser l'un de l'élément d'indexation 410 et du logement 420 vers l'autre. Par exemple, le ressort d'appui 414 peut être configuré pour pousser l'élément d'indexation 410 vers le logement 420.

Le dispositif de rappel 413 peut comprendre une vis de calibration 415 adaptée pour coopérer avec le ressort d'appui 414, pour modifier une raideur du dispositif de rappel 413. En variant la raideur du dispositif de rappel 413, il est possible de varier le seuil de couple du système de verrouillage 400. Une raideur plus élevée correspond à une valeur de seuil de couple plus élevée, et une raideur plus faible correspond à une valeur de seuil de couple plus faible.

De manière générale, lors du passage du système de verrouillage 400 à la configuration engagée, l'élément d'indexation 410 vient s'insérer dans le logement 420 selon une direction d'insertion 310.

Comme on le voit en figures 4A-4B, la direction d'insertion 310 peut être sensiblement parallèle à la direction de translation 320, ou à l'axe de rotation 300. Ainsi, il peut être possible de passer à la configuration engagée à l'aide du poids du premier ensemble 210 ou du second ensemble 220, et/ou à l'aide du poids de l'hélice primaire 100 et/ou du poids de son arbre (dans le cas d'un axe de rotation 300 sensiblement vertical, par exemple). Sinon, lorsque l'axe de rotation 300 est sensiblement horizontal, par exemple, cette configuration peut permettre au système de verrouillage 400 d'entrer en configuration engagée à l'aide de la trainée aéronautique sur l'hélice primaire 100.

Alternativement, comme on le voit en figure 2A, la direction d'insertion 310 peut être sensiblement perpendiculaire à la direction de translation 320, ou à l'axe de rotation 300. Cette configuration peut permettre de réduire la longueur de l'arbre de l'hélice primaire 100, et/ou de minimiser l'encombrement du système de verrouillage 400 dans la direction de translation 320. Lorsque le dispositif de rappel 413 est présent, il peut faciliter l'insertion de l'élément d'indexation 410 dans le logement 420 lorsque le premier ensemble 210 et le second ensemble 220 sont en position de repos, et peut maintenir la configuration engagée aussi. Une direction d'insertion 310 perpendiculaire à la direction de translation 320 peut aussi faciliter la calibration de la raideur du dispositif de rappel 413.

Il est également prévu d'utiliser un dispositif de rappel 413 lorsque la direction d'insertion 310 est parallèle à la direction de translation 320.

De manière générale, un logement donné peut définir au moins une position de verrouillage, qui est prédéterminée. De manière avantageuse, en position de verrouillage, au moins une pale 101 de l'hélice primaire 100 s'étend sensiblement dans une même direction, par rapport à l'aéronef, que la direction « e » d'écoulement d'air autour de l'aéronef lors d'au moins une partie d'une phase de vol, comme on le voit en figure 1B. On parle d'une position « drapeau ». Par exemple, lors d'une phase de croisière, l'air s'écoule autour de l'aéronef sensiblement parallèle à un axe longitudinal de l'aéronef. Dans ce cas de figure, la pale 101, s'étendant radialement depuis l'arbre de l'hélice primaire 100, peut être orientée de manière que son extension radiale est parallèle à l'axe longitudinal 800 de l'aéronef.

Une position drapeau peut permettre de réduire la trainée aérodynamique de l'hélice primaire 100 lorsqu'elle n'est pas entrainée par le moteur 200, notamment dans le cas d'une hélice primaire 100 à deux ou trois pales.

Lorsque l'hélice primaire 100 comprend plus de trois pales, la position drapeau de l'hélice primaire 100 est celle pour laquelle l'orientation des pales offre la moindre résistance à l'écoulement du vent.

De manière générale, le système de verrouillage 400 définit au moins une position de verrouillage. Par exemple, en figure 3A, le système de verrouillage 400 définit une seule position de verrouillage parce qu'il comprend un unique logement 420 coopérant avec un unique élément d'indexation 410. En figure 5, le système de verrouillage 400 définit plusieurs positions de verrouillage parce qu'il comprend plusieurs logements 421, 422, 423, 424.

Selon un exemple, lorsque plusieurs positions de verrouillage sont définies, chaque position de verrouillage met l'hélice primaire 100 dans une position qui minimise sa trainée. Par exemple, une hélice primaire 100 à deux pales peut être verrouillée dans deux positions de verrouillage qui correspondent aux positions drapeaux de l'hélice primaire 100. Dans le cas d'une hélice primaire 100 à trois pales, trois positions de verrouillage, correspondant aux positions drapeau de l'hélice primaire 100 peuvent être prévues.

Le système de verrouillage 400 peut comprendre un nombre de logements 421, 422 égal à un nombre de pales 101, 102 de l'hélice primaire 100. Une telle configuration peut réduire le temps nécessaire pour passer de la configuration libre à la configuration engagée. Le système de verrouillage 400 peut comprendre un nombre d'éléments d'indexation 410, 410' égal au nombre de logements 421, 422, ou au nombre de pales 101, 102 de l'hélice primaire 100. Selon un exemple, le système de verrouillage 400 comprend un nombre d'éléments d'indexation 410, 410' inférieur au nombre de pales 101, 102 de l'hélice primaire 100, et/ou inférieur au nombre de logements 421, 422, comme on le voit en figure 3B. Bien qu'une pluralité d'éléments d'indexation 410, 410' peut permettre d'augmenter la valeur seuil de couple du système de verrouillage 400, un nombre d'éléments d'indexation 410, 410' qui est inférieur au nombre de logements 421, 422 et/ou au nombre de pales 101, 102 de l'hélice primaire 100 peut permettre d'éviter un surpoids du système de verrouillage 400 et/ou d'éviter la définition d'une valeur seuil de couple excessive par rapport aux besoins de l'aéronef. Par ailleurs, ou alternativement, une telle configuration peut éviter de rendre le système de verrouillage 400 hyperstatique dans sa configuration engagée.

En figure 2A, on voit une hélice primaire 100, un moteur 200, et un système de verrouillage 400. L'hélice primaire 100 et le moteur 200 sont sensiblement coaxiaux de façon à ce qu'ils partagent un même axe de rotation 300. Par exemple, un arbre de l'hélice primaire 100 est solidaire du rotor du moteur 200.

Le moteur 200 et l'hélice primaire 100 sont configurés pour coopérer en configuration de traction. Le système de verrouillage 400 est disposé entre l'hélice primaire 100 et le moteur 200.

Un premier ensemble 210 et un second ensemble 220 du moteur 200 sont représentés dans une position de repos, ce qui permet à l'élément d'indexation 410 du système de verrouillage 400 de venir s'insérer dans le logement 420 du système de verrouillage 400 selon une direction d'insertion 310 qui est sensiblement perpendiculaire à l'axe de rotation 300, et ce qui permet donc au système de verrouillage 400 de passer à sa configuration engagée. Le système de verrouillage 400 est maintenu en configuration engagée par coopération entre une extrémité libre 412 de l'élément d'indexation 410 et le logement 420. Cette coopération peut être rompue lorsque le moteur 200 applique un couple aux premier ensemble 210 et second ensemble 220 supérieur à une valeur seuil de couple du système de verrouillage 400.

En figure 3A, on voit une vue de section du système de verrouillage 400 représenté en figure 2A. Le système de verrouillage 400 comprend un dispositif de rappel 413 tendant à insérer l'extrémité libre 412 de l'élément d'indexation 410 dans le logement 420. Une raideur du dispositif de rappel 413 détermine au moins partiellement la valeur seuil de couple du système de verrouillage 400. Le dispositif de rappel 413 comprend un ressort d'appui 414 et une vis de calibration 415 qui coopèrent pour varier la raideur du dispositif de rappel 413.

L'élément d'indexation 410 comprend un doigt dont l'extrémité libre 412 vient s'insérer dans une pièce cylindrique 419 présentant le logement 420. La pièce cylindrique 419 peut être fixée à l'arbre du moteur 200 et/ou à l'arbre de l'hélice primaire 100.

Le doigt est monté coulissant dans un boitier du dispositif de rappel 413 qui sert à monter le dispositif de rappel 413, à guider le doigt et à aménager le ressort d'appui 414 et la vis de calibration 415.

Le logement 420 est présenté sur une surface circonférentielle de la pièce cylindrique 419, opposée à l'extrémité libre 412 de l'élément d'indexation 410. Cette disposition peut faciliter l'insertion de l'élément d'indexation 410 dans le logement 420 selon la direction d'insertion 310.

La surface circonférentielle peut comprendre une partie plate dans lequel le logement 420 est formé. La partie plate peut permettre d'augmenter la valeur seuil du couple du système de verrouillage 400, et/ou de provoquer une compression progressive du dispositif de rappel 413. En cas d'application ponctuelle d'un couple parasite dégageant l'élément d'indexation 410 du logement 420 (ce qui peut risquer de se produire lors de turbulences, par exemple), la partie plate peut permettre de ramener l'élément d'indexation dans le logement 420. La partie plate peut être dimensionnée en fonction du nombre de pales, et/ou du nombre de logements 420 et/ou d'éléments d'indexation 410, et/ou en fonction de la valeur seuil de couple du système de verrouillage 400.

Selon un exemple, la pièce cylindrique 419 peut avoir une épaisseur égale ou inférieure à la course de translation (mesurée dans le sens de la course en translation). Par exemple, la pièce cylindrique 419 peut avoir une épaisseur légèrement inférieure à la course de translation pour échapper de l'élément d'indexation lors de la position en service.

Une telle configuration peut permettre à un unique système de verrouillage 400 d'assurer le verrouillage et déverrouillage d'un moteur 200 et d'une hélice primaire 100 lorsqu'ils coopèrent en traction ainsi qu'en propulsion, éventuellement à l'aide d'une unique pièce cylindrique 419. Dans ce cas de figure, la position de repos est disposée entre deux positions de service.

Lorsque la pièce cylindrique comporte une bride circonférentielle 418 (détaillée plus bas), l'épaisseur de la pièce cylindrique 419 ne prend pas en compte l'épaisseur de la bride circonférentielle 418.

Le logement 420 peut être réalisé dans une rainure. La rainure peut permettre de faciliter l'insertion de l'élément d'indexation 410 dans le logement 420 lorsque le premier ensemble 210 et le second ensemble 220 passent de la position de service à la position de repos. Par exemple, l'effort nécessaire à la compression du dispositif de rappel 413 pour insérer le doigt dans le logement 420 est moins important lorsque le doigt passe par la rainure.

Lorsque la rainure a une profondeur (mesurée depuis la surface circonférentielle de la pièce cylindrique 419 vers l'axe de rotation) égale à celle du logement 420, il peut être possible que le dispositif de rappel 413 ne soit pas comprimé lorsque le doigt passe par la rainure. Dans ce cas de figure, on peut dire qu'un système de verrouillage 400 présente deux directions d'insertion : la première direction d'insertion 310 étant perpendiculaire à la direction de translation 320 (dû par exemple à l'orientation du dispositif de rappel 413), et la deuxième direction d'insertion étant définie par la rainure.

La rainure peut s'étendre depuis le logement 420 dans la direction de translation 310 (ou parallèle à celle-ci), ou peut suivre un chemin hélicoïdal autour de l'axe de rotation. Sa largeur (qui peut être mesurée dans la direction circonférentielle de la pièce cylindrique 419) peut être constante ou peut varier en fonction de la distance au logement 420.

La rainure peut avoir une section (mesurée selon sa direction/chemin d'extension depuis le logement 420) qui est sensiblement demi-cylindrique, ou même demi-conique, avec la base du cône orientée à distance du logement 420, afin de guider le logement 420 vers l'élément d'indexation 410 lors du passage à la position de repos. D'autres formes de pièces mobiles 210 peuvent être imaginées pour faciliter l'introduction de l'élément d'indexation lors du mouvement de translation.

Comme on le voit en figure 2B, le système de verrouillage 400 est configuré de manière à passer de la configuration engagée à la configuration libre lorsque le moteur 200 applique un couple de rotation supérieur à la valeur seuil de couple sur le premier ensemble 210 et le second ensemble 220. La valeur seuil de couple peut être définie en fonction du nombre de pales de l'hélice primaire 100. Par exemple, une valeur seuil sensiblement égale à 10 N-m ou plus peut être suffisante pour une petite hélice primaire 100 à au moins deux pales, et/ou une valeur seuil de 500 N-m ou moins peut être suffisante pour une hélice primaire 100 à six pales ou moins. Lorsque l'hélice primaire 100 est une hélice à 3, 4 ou 5 pales, par exemple, la valeur seuil peut être entre 10 et 500 N-m, ou entre 10 et 350 N-m, ou entre 350 et 500 N-m, avec un nombre croissant de pales correspondant à une valeur de seuil plus importante. Ainsi, un couple appliqué au système de verrouillage 400 par l'écoulement sur l'hélice primaire 100 dans des conditions de vol normales n'est pas suffisant pour la déverrouiller, mais un couple appliqué au système de verrouillage 400 par le moteur 200 est suffisant pour déverrouiller l'hélice primaire 100.

Lorsque le système de verrouillage 400 quitte la configuration engagée, l'hélice primaire 100 est entrainée par le moteur 200, et génère donc une poussée qui tend à écarter le logement 420 par rapport à l'élément d'indexation 410 selon une direction de translation 320 qui est sensiblement parallèle à l'axe de rotation 300 (et donc sensiblement perpendiculaire à la direction de translation 310). La poussée tend aussi à mettre le premier ensemble 210 et le second ensemble 220 du moteur 220 dans une position de service. Lorsque le premier ensemble 210 et le second ensemble 220 sont en position de service, l'élément d'indexation 410 et le logement 420 s'échappent l'un à l'autre, ce qui empêche le système de verrouillage 400 de retourner à la configuration engagée.

Par ailleurs, la poussée sert à maintenir le système de verrouillage 400 dans une configuration libre, puisqu'elle maintient le premier ensemble 210 et le second ensemble 220 en position de service.

Le premier ensemble 210 et le second ensemble 220 peuvent retourner à la position de repos lorsque le moteur 200 arrête d'entrainer l'hélice primaire 100.

Puisque l'hélice primaire 100 et le moteur 200 coopèrent en configuration de traction, et que le logement 420 est solidaire de l'arbre de l'hélice primaire 100, le passage à la position de service engendre un écartement du logement 420 par rapport au moteur 200 selon la direction de translation 320, au carter duquel est fixé l'élément d'indexation 410. De même, le passage à la position de repos engendre un rapprochement du logement 420 par rapport au moteur 200 (et donc à l'élément d'indexation 410) selon la direction de translation 320.

Comme on le voit en figure 2A, la pièce cylindrique 419 peut comprendre une bride circonférentielle 418. La bride circonférentielle 418 peut définir une limite à la course en translation du premier ensemble 210 et du second ensemble 220 l'un par rapport à l'autre, ou du logement 420 et de l'élément d'indexation 410 l'un par rapport à l'autre, au niveau de la position de repos. La bride circonférentielle 418 peut par exemple venir s'appuyer sur l'élément d'indexation 410 pour éviter que le logement 420 ne dépasse l'extrémité libre 412 de l'élément d'indexation 410, par exemple en limitant le rapprochement du logement 420 au moteur 200 selon la direction de translation 320.Selon un exemple, le boiter permet aussi de régler l'emplacement du doigt selon la direction de translation 320 par rapport au logement 420, afin de faciliter la reconfiguration du système de verrouillage 400 lors d'un changement de coopération entre l'hélice primaire 100 et le moteur 200. La reconfiguration du système de verrouillage 400 peut comprendre l'inversement de la pièce cylindrique 419 par rapport à la direction de translation 320 lorsque la bride circonférentielle est présente.

En figure 2C, on voit un moteur 200, dont le premier ensemble 210 et le second ensemble 220 sont représentés en position de repos, une hélice primaire 100, et un système de verrouillage 400. L'hélice primaire 100 peut être liée au moteur 200 de la même manière que celle dont l'hélice primaire 100 est liée au moteur 200 en figure 2A. Le moteur 200 et l'hélice primaire 100 sont configurés pour coopérer en configuration de propulsion. Le moteur 200 est disposé entre système de verrouillage 400 et l'hélice primaire 100. Le système de verrouillage 400 peut être sensiblement identique à celui visible en figure 2A.

Comme on le voit en figure 2D, lorsque le moteur 200 applique un couple de rotation supérieur à la valeur seuil de couple sur le premier ensemble 210 et le second ensemble 220, le système de verrouillage 400 quitte sa configuration engagée, et le moteur 200 entraine l'hélice primaire 100. La poussée générée par l'hélice primaire 100 tend à rapprocher l'hélice primaire 100 au moteur 200 selon la direction de translation 320.

Puisque l'hélice primaire 100 et le moteur 200 coopèrent en configuration de propulsion, et que le logement 420 est solidaire de l'arbre de l'hélice primaire 100, le passage à la position de service engendre un écartement, selon la direction de translation 320, du logement 420 par rapport au moteur 200, au carter duquel est fixé l'élément d'indexation 410. De même, le passage à la position de repos engendre un rapprochement du logement 420 au moteur 200 selon la direction de translation 320.

Lorsque le boiter du dispositif de rappel 413 permet de régler l'emplacement du doigt selon la direction de translation 320 par rapport au logement 420, le système de verrouillage 400 peut, selon un exemple, être reconfiguré d'un changement de coopération entre l'hélice primaire 100 et le moteur 200, en inversant l'ordre du logement 420 et de l'élément d'insertion 410 selon la direction de translation 320. La reconfiguration du système de verrouillage 400 peut comprendre l'inversement de la pièce cylindrique 419 par rapport à la direction de translation 320 lorsque la bride circonférentielle est présente.

En figure 3B, on voit un composant alternatif pour le système de verrouillage 400 visible en figure 3A. Il s'agit d'une variante de la pièce cylindrique 419, comprenant plusieurs logements 421, 422. Les logements 421, 422 sont présentés sur une surface circonférentielle de la pièce cylindrique 419. L'un au moins des logements 421, 422 peut être formé dans une partie plate de la surface circonférentielle, ou, comme on le voit en figure 3B, chaque logement 421, 422 peut être formé dans sa propre partie plate de la surface circonférentielle.

En figure 4A, on voit un moteur 200, une hélice primaire 100, et un système de verrouillage 400. L'hélice primaire 100 peut être liée au moteur 200 de la même manière que celle dont l'hélice primaire 100 est liée au moteur 200 en figure 2A. L'hélice primaire 100 et le moteur 200 sont configurés pour coopérer en configuration de traction. Le système de verrouillage 400 est disposé entre le moteur 200 et l'hélice primaire 100.

Le moteur 200 est représenté avec son premier ensemble 210 et son second ensemble 220 position de repos, ce qui permet à l'élément d'indexation 410 du système de verrouillage 400 de venir s'insérer/s'encastrer dans le logement 420 du système de verrouillage 400 selon une direction d'insertion 310 qui est sensiblement parallèle à l'axe de rotation 300, et ce qui permet donc au système de verrouillage 400 de passer à sa configuration engagée.

Comme on le voit en figure 4B, l'élément d'indexation 410 comprend un ergot dont l'extrémité libre 412 peut venir s'insérer dans une pièce cylindrique 419 présentant le logement 420. L'ergot est en saillie selon la direction d'insertion 310. L'élément d'indexation 410 peut être réalisé comme une bague disposé autour de l'axe de rotation 300.

Le logement 420 est présenté sur une surface axiale de la pièce cylindrique 419, opposée à l'extrémité libre 412 de l'élément d'indexation 410. Cette disposition peut faciliter l'insertion de l'élément d'indexation 410 dans le logement selon la direction d'insertion 310. La pièce cylindrique 419 peut être sensiblement creuse, par exemple elle peut être réalisée comme une bague entourant l'arbre de l'hélice primaire 100.

Le logement 420 est réalisé comme une encoche dont une surface correspond sensiblement à une surface de l'extrémité libre 412 de l'élément d'insertion 410. Ces surfaces correspondantes du logement 420 et de l'élément d'indexation 410 peuvent coopérer entre elles de manière à, lorsque le moteur 200 applique un couple de rotation supérieur à la valeur de seuil de couple sur le premier ensemble 210 et le second ensemble 220 pour déverrouiller le système de verrouillage 400, ces surfaces poussent le logement 420 et l'élément d'indexation 410 à s'écarter l'un de l'autre selon une direction de translation 320 qui est sensiblement parallèle à l'axe de rotation 300 (et donc sensiblement parallèle à la direction d'insertion 310).

La valeur seuil de couple du système de verrouillage 400 peut être déterminée au moins en partie par la géométrie d'au moins l'une des surfaces correspondantes de l'ergot et de l'encoche. En assurant un mouvement des premier ensemble 210 et second ensemble 220 pour quitter la position de repos lorsque le système de verrouillage 400 quitte la configuration engagée, la structure du système de verrouillage 400 (et donc celle de l'aéronef) peut être simplifiée.

Par exemple, la valeur seuil de couple peut varier en fonction de la profondeur du logement 420. Par exemple, un logement 420 relativement profond peut conférer une valeur seuil de couple plus importante qu'un logement 420 relativement peu profond.

En alternative ou en complément, la valeur seuil de couple peut varier en fonction de la raideur du bord (ou des bords) du logement 420 dans le sens de rotation de l'hélice primaire 100. Par exemple, pour deux logements 420 d'une même profondeur, celui qui a un bord relativement raide dans le sens de rotation de l'hélice primaire 100 peut conférer une valeur seuil de couple plus importante que celui relativement peu raide.

Selon un exemple, les bords du logement 420 dans le sens de rotation de l'hélice primaire 100 peuvent définir un angle interne dans le plan de rotation de l'hélice primaire 100 de 60-120°.

Selon un exemple, le pourtour du logement 420 peut être arrondi. Cette configuration peut permettre de réduire l'usure du système de verrouillage 400.

Lorsque l'un des bords du logement 420 est arrondi dans le sens de rotation de l'hélice primaire 100, on peut considérer l'angle comme étant définit en partie par le tangent du bord au niveau de sa liaison avec le pourtour du logement 420.

Pour réduire l'usure du système de verrouillage 400 (ou de son logement 420 ou de son élément d'indexation 410), l'élément d'indexation 410 peut comprendre un élément roulant au niveau de l'extrémité libre 412 de l'ergot. Dans ce cas de figure, l'encoche peut présenter une surface circulaire comme décrite précédemment pour le logement 420 visible en figure 3A.

Puisque le logement 420 est solidaire de l'arbre de l'hélice primaire 100, et que l'élément d'indexation 410 est fixé au carter du moteur 200, cet écartement tend aussi à translater le premier ensemble 210 et le second ensemble 220 du moteur 200, l'un par rapport à l'autre selon la direction de translation 320 vers une position de service.

Lorsque le système de verrouillage 400 a quitté sa configuration engagée, le moteur 200 peut entrainer l'hélice primaire 100, générant une poussée. Puisque l'hélice primaire 100 et le moteur 200 coopèrent en configuration de traction, cette poussée peut tendre à écarter le logement 420 de l'élément d'indexation 410 jusqu'à ce que l'élément d'indexation 410 et le logement 420 s'échappent l'un à l'autre, ce qui empêche le système de verrouillage 400 de retourner à la configuration engagée.

Par ailleurs, la poussée sert à maintenir le système de verrouillage 400 dans une configuration libre, puisqu'elle maintient le premier ensemble 210 et le second ensemble 220 en position de service. Le premier ensemble 210 et le second ensemble 220 peuvent retourner à la position de repos lorsque le moteur 200 arrête d'entrainer l'hélice primaire 100, ce qui permet au système de verrouillage 400 de passer à la configuration engagée.

En figure 4C, on voit une hélice primaire 100, un système de verrouillage 400, et un moteur. L'hélice primaire 100 peut être liée au moteur 200 de la même manière que celle dont l'hélice primaire 100 est liée au moteur 200 en figure 2A. L'hélice primaire 100 et le moteur 200 sont configurés pour coopérer en configuration de propulsion. Le moteur 200 est disposé entre l'hélice primaire 100 et le système de verrouillage 400. Le système de verrouillage 400 est sensiblement identique au système de verrouillage 400 représenté en figure 4B. On voit que l'orientation du système de verrouillage 400 représenté en figure 4C par rapport au moteur 200 et à l'hélice primaire 100 est inversée selon la direction de translation 320 par rapport au système de verrouillage 400 représenté en figure 4B. Par conséquent, en figure 4C, l'élément d'indexation 410 est disposé entre l'hélice primaire 100 et le logement 420.

En figure 5, on voit une hélice primaire 100, un système de verrouillage 400, et un moteur 200. L'hélice primaire 100 peut être liée au moteur 200 de la même manière que celle dont l'hélice primaire 100 est liée au moteur 200 en figure 2A. L'hélice primaire 100 et le moteur 200 sont configurés pour coopérer en configuration de traction. Le système de verrouillage 400 est disposé entre le moteur 200 et l'hélice primaire 100.

Le moteur 200 est représenté avec son premier ensemble 210 et son second ensemble 220 en position de service, et le système de verrouillage 400 est représenté dans sa configuration libre. Lors de son entrainement par le moteur 200, l'hélice primaire 100 génère une poussée tendant à maintenir le premier ensemble 210 et le second ensemble 220 en position de service, et tendant donc aussi à maintenir le système de verrouillage 400 en configuration libre.

Le système de verrouillage comprend au moins deux logements 421, 422 et deux éléments d'indexation 410, 410'. D'autres pluralités de logements 421, 422 et/ou d'éléments d'indexation 410, 410' sont également prévues. Par exemple, en figure 5, le système de verrouillage comprend quatre logements 421, 422, 423, 424 et deux éléments d'indexation 410, 410'.

Chaque élément d'indexation 410, 410' comprend une tige supportée perpendiculairement et/ou radialement par rapport à l'axe de rotation 300. Chaque logement 421, 422 est formé sur une surface axiale d'une pièce cylindrique 419 opposée des éléments d'indexation 410, 410'. Les logements 421, 422 peuvent être réalisés comme des encoches.

La pièce cylindrique 419 est disposée autour de l'axe de rotation 300. Lorsque la pièce cylindrique 419 est solidaire au carter du moteur 200 ou à l'aéronef, elle peut avoir une forme de bague dans lequel l'arbre de l'hélice primaire 100, ou le rotor du moteur 200 (ou plus précisément l'arbre de sortie du moteur 200) peut être arrangé.

Lorsque le système de verrouillage 400 passe à sa configuration engagée, les tiges viennent s'insérer/s'enclencher dans les logements 421, 422. Pour assurer l'insertion, et le retrait (lors du passage à la configuration libre), les tiges peuvent être solidaires du premier ensemble 210 (par exemple de l'arbre de l'hélice primaire 100), et la pièce cylindrique 419 peut être solidaire du second ensemble 220 (par exemple du carter du moteur 200).

Lorsqu'une tige est solidaire d'un arbre (comme celui de l'hélice primaire 100, par exemple), son diamètre peut être inférieur à celui de l'arbre. Par exemple, le diamètre de la tige peut être compris entre 1/20 et 1/8 du diamètre de l'arbre, en fonction du nombre et de la forme des pales de l'hélice primaire 100. Lorsqu'une tige s'étend radialement depuis l'arbre, elle peut être fixée dans un trou radial que présente l'arbre. Selon un exemple, un tel trou peut être traversant, afin d'aménager deux tiges qui sont diamétralement opposées et solidaires l'une de l'autre.

Le premier ensemble 210 le second ensemble 220 du moteur 200 peuvent passer à leur position de repos lorsque l'hélice primaire 100 n'est pas entraînée par le moteur 200. Puisque l'hélice primaire 100 et le moteur 200 coopèrent en configuration de traction, ce passage est accompagné d'un rapprochement de l'hélice primaire 100 au moteur 200 selon la direction de translation 320, qui est sensiblement parallèle à l'axe de rotation 300. Puisque les tiges sont solidaires de l'arbre de l'hélice primaire 100, et la pièce cylindrique 419 est solidaire du carter du moteur 200, le rapprochement de l'hélice primaire 100 au moteur 200 engendre aussi un rapprochement des tiges aux logements 421, 422 selon une direction d'insertion 310 qui est sensiblement parallèle à la direction de translation 320.

L'écartement des éléments d'indexation 410, 410' des logements 421, 422 peut engendrer la translation du premier ensemble 210 et du deuxième ensemble 220 vers la position de service, de façon à quitter la position de repos.

L'une au moins des tiges peut comprendre une surface circonférentielle au niveau de son extrémité libre 412 qui correspond à une surface en contact des logements 421, 422. Comme on l'a vu avec le système de verrouillage 400 représenté en figure 4A, la coopération entre ces surfaces peut écarter le(s) élément(s) d'indexation 410, 410' du/des logement(s) 421, 422 selon la direction de translation 320 lorsque le moteur 200 applique un couple au premier ensemble 210 et au deuxième ensemble 220 supérieur à la valeur seuil de couple du système de verrouillage 400. La valeur seuil de couple du système de verrouillage 400 peut être déterminée au moins en partie par les géométries des surfaces correspondantes de la tige et de l'encoche (par exemple par les mêmes phénomènes liés à la raideur et/ou à la profondeur décrits précédemment).

Pour limiter l'usure des tiges et/ou des encoches du système de verrouillage, chaque tige peut comprendre un élément roulant. Chacune des surfaces correspondantes des logements 421, 422 peuvent avoir une surface circulaire comme décrite précédemment pour le logement 420 visible en figure 3A.

L'hélice primaire 100 comprend deux pales 101, 102, et le système de verrouillage 400 comprend deux logements 421, 422 pour assurer deux positions de verrouillage. Lorsque l'hélice primaire 100 comprend plus de deux pales, d'autres nombres de positions de verrouillage sont prévus. D'autres nombres de pales 101, 102 sont également prévus, ainsi que d'autres nombres de logements 421, 422, ou d'éléments d'indexation 410, 410' qui peuvent être égaux ou inégaux aux nombres de pales 101, 102. Par exemple, lorsque l'hélice primaire 100 comprend quatre pales 101, 102, 103, 104, le système de verrouillage 400 peut comprendre deux éléments d'indexation 410, 410' et quatre logements 421, 422, 423 et 424 visible sur la figure 5.

Un système de verrouillage 400 à plusieurs éléments d'indexation 410, 410' peut avoir une valeur seuil de couple plus importante qu'un système de verrouillage 400 à un unique élément d'indexation 410.

Comme on l'a vu dans les figures 4B et 4C, ce système de verrouillage 400 représenté en figure 5 peut être réorienté par rapport à la direction de translation 320 pour convenir à une configuration de propulsion entre l'hélice primaire 100 et le moteur 200.

Selon un exemple, un aéronef selon le présent exposé peut être configuré pour verrouiller et/ou déverrouiller l'hélice primaire 100 pendant un vol comprenant une première phase de vol, dans laquelle un écoulement d'air autour de l'aéronef est sensiblement parallèle à l'axe de rotation de l'hélice primaire, et une deuxième phase de vol, dans laquelle l'écoulement d'air autour de l'aéronef est sensiblement perpendiculaire à l'axe de rotation 300 de l'hélice primaire 100. Par exemple, il peut être configuré pour croiser transversalement, et pour décoller et/ou atterrir verticalement.

Selon un exemple, l'aéronef peut réaliser une manoeuvre de vol comprenant une étape dans laquelle diminue la poussée de l'hélice primaire 100 jusqu'à ce que le premier ensemble 210 et le second ensemble 220 passent en position de repos. Par exemple, le passage du système de verrouillage 400 en configuration engagée peut être réalisé lors d'un arrêt de l'entrainement de l'hélice primaire 100 par le moteur 200.

Cette étape peut permettre le basculement du système de verrouillage 400 depuis la configuration libre à la configuration engagée. En alternative ou en complément, la manoeuvre de vol peut comprendre une étape dans laquelle l'hélice primaire 100 est libérée en rotation par l'application d'un couple moteur au premier ensemble 210 et au second ensemble 220 du moteur 200 supérieur à la valeur seuil de couple du système de verrouillage 400. Cette étape peut permettre le basculement du système de verrouillage 400 depuis la configuration engagée à la configuration libre.

Par exemple, l'aéronef peut réaliser une telle manoeuvre dans le cadre d'une réorientation de l'axe de rotation de l'hélice primaire 100 par rapport au corps de l'aéronef. Dans ce cas de figure, le verrouillage de l'hélice primaire 100 peut permettre aussi d'éviter des effets gyroscopiques dus à la rotation de l'hélice primaire 100 autour de son axe de rotation pendant la réorientation de ceci.

Le verrouillage de l'hélice primaire 100 peut s'avérer utile dans de nombreuses circonstances. Par exemple, lors de l'arrêt de l'entrainement moteur réalisé dans le contexte d'une phase de vol (comme décrits précédemment), et/ou lors d'une panne du moteur 200.

La capacité de verrouiller ou libérer sélectivement l'hélice primaire 100 passivement permet d'éviter des problèmes de sûreté de fonctionnement, par rapport à un verrouillage par couple moteur, ou un verrouillage et libération sélective par électroaimant, et permet en plus de réduire la consommation énergétique de l'aéronef.

De manière générale, un système de verrouillage 400 peut être considéré apte à être utilisé avec un moteur 200 et une hélice primaire 100 coopérants en configuration de traction si l'éloignement de l'hélice primaire 100 du moteur 200 a pour effet d'éloigner le logement 420 de l'élément d'indexation 410. De même, un système de verrouillage 400 peut être considéré apte à être utilisé avec un moteur 200 et une hélice primaire 100 coopérant en configuration de propulsion si le rapprochement de l'hélice primaire 100 au moteur 200 a pour effet d'éloigner le logement 420 de l'élément d'indexation 410.

Pour rendre un système de verrouillage 400, qui est apte à être utilisé avec la configuration de traction, apte à être utilisé avec la configuration de propulsion (ou inversement), sans changer son positionnement relatif par rapport au moteur et à l'hélice, on peut inverser l'orientation du système de verrouillage 400 dans la direction de translation 320, et l'emplacement du logement 420 et de l'élément d'insertion, de manière à ce que la position de service devienne la position de repos.

Comme on le voit en figures 4B-4C, et en figures 2B & 2D, ceci peut être réalisé en inversant l'orientation du système de verrouillage 400 et les emplacements du système de verrouillage 400 et du moteur 200 par rapport à l'hélice primaire 100. Cette technique peut permettre de conserver les manières dont le logement 420 et l'élément d'indexation 410 sont fixés au premier ensemble 210 et au second ensemble 220.

Sinon, comme on le voit en figures 4B et 5, on peut obtenir le même effet en inversant l'orientation du système de verrouillage 400 et les fixations de l'élément d'indexation 410 et du logement 420 au premier ensemble 210 et au second ensemble 220. Cette technique peut permettre de conserver les emplacements du système de verrouillage 400 et du moteur 200 par rapport à l'hélice primaire 100.

Pour appliquer cette technique au système de verrouillage 400 visible en figure 5, il peut être nécessaire d'inverser l'orientation de la pièce cylindrique 419, pour préserver l'accessibilité de l'élément d'indexation 410 (qu'il soit réalisée en forme d'une ou plusieurs tiges, ou en forme d'un ou plusieurs ergots) aux encoches 421, 422, 423, 424.

Pour appliquer cette technique au système de verrouillage 400 visible en figure 4A-4B (ou à celui visible en figure 4C), il peut aussi être nécessaire d'inverser l'orientation de l'élément d'indexation 410 pour préserver la capacité de l'ergot de pénétrer dans l'encoche 420.

Pour appliquer cette technique au système de verrouillage 400 visible en figures 2A-2B (ou celui visible en figures 2C-2D), il peut être nécessaire d'inverser l'orientation de la pièce cylindrique 419, pour préserver l'accessibilité de l'élément d'indexation 410 à la rainure (si présente) depuis la position de service, et/ou pour éviter que la bride circonférentielle 418 (si présente) bloque le passage depuis la position de service à la position de repos.

## Revendications

1. Aéronef comprenant une hélice primaire (100) entraînée en rotation par un moteur (200), le moteur présentant un premier ensemble (210) et un second ensemble (220) mobiles en rotation l'un par rapport à l'autre selon un axe de rotation (300), l'hélice primaire étant solidaire en rotation de l'un desdits premier ensemble et second ensemble, ledit aéronef comprenant un système de verrouillage (400), comprenant un logement (420, 421, 422) et un élément d'indexation (410, 410'), le logement étant formé dans l'un parmi le premier ensemble et le second ensemble, l'élément d'indexation étant solidaire de l'autre parmi le premier ensemble et le second ensemble, le système de verrouillage présentant une configuration engagée dans laquelle l'élément d'indexation est au moins partiellement inséré dans le logement, et une configuration libre dans laquelle l'élément d'indexation n'est pas au moins partiellement inséré dans le logement, le système de verrouillage étant configuré de manière à ce qu'en configuration engagée, le mouvement de rotation du premier ensemble par rapport au second ensemble soit limité à un secteur angulaire prédéterminé, le système de verrouillage étant configuré de manière à passer de la configuration engagée à la configuration libre lorsque le moteur applique un couple de rotation supérieur à une valeur seuil de couple sur le premier ensemble ou sur le second ensemble, **caractérisé en ce que** le premier ensemble et le second ensemble sont mobiles en translation l'un par rapport à l'autre selon une direction de translation définie par l'axe de rotation, entre une position de repos et une position de service, et **en ce que** le système de verrouillage ne peut être en configuration engagée que lorsque le premier ensemble et le second ensemble sont en position de repos.

2. Aéronef selon la revendication 1, dans lequel l'élément d'indexation comprend un élément roulant (411) apte à être introduit dans le logement.

3. Aéronef selon la revendication 1 ou 2, configuré à ce qu'une poussée, générée lors d'un entrainement de l'hélice primaire par le moteur, s'oppose à un passage du premier ensemble et du second ensemble depuis la position de service vers la position de repos.

4. Aéronef selon l'une quelconque des revendications 1-3, dans lequel le système de verrouillage comprend un dispositif de rappel (413) tendant à insérer l'élément d'indexation dans le logement lorsque les premier ensemble et second ensemble sont en position de repos.

5. Aéronef selon la revendication 4, dans lequel le dispositif de rappel comprend un ressort d'appui (414) pour pousser l'un de l'élément d'indexation et du logement vers l'autre, et une vis de calibration (415) en coopération avec le ressort d'appui pour modifier une raideur du dispositif de rappel.

6. Aéronef selon la revendication 4 ou 5, dans lequel l'élément d'indexation est inséré dans le logement selon une direction d'insertion (310) qui est sensiblement perpendiculaire à l'axe de rotation, et le dispositif de rappel tend à insérer l'élément d'indexation dans le logement lorsque les premier ensemble et second ensemble sont en position de repos.

7. Aéronef selon l'une quelconque des revendications 1-5, dans lequel l'élément d'indexation est inséré dans le logement selon une direction d'insertion (310) qui est sensiblement parallèle à l'axe de rotation, et les premier ensemble et second ensemble quittent la position de repos lorsque le système de verrouillage quitte la configuration engagée.

8. Aéronef selon l'une quelconque des revendications 1-7, dans lequel le système de verrouillage comprend plusieurs logements.

9. Aéronef selon la revendication 8, dans lequel le système de verrouillage comprend un nombre de logements égal à un nombre de pales (101, 102) de l'hélice primaire.

10. Aéronef selon la revendication 8 ou 9, dans lequel le système de verrouillage comprend un nombre d'éléments d'indexation inférieur à un nombre de pales (101, 102) de l'hélice primaire.

11. Aéronef selon l'une quelconque des revendications 1 à 10, dans lequel le secteur angulaire prédéterminé est inférieur à 5°.

## Patentansprüche

1. Luftfahrzeug, umfassend eine Hauptluftschraube (100), die von einem Motor (200) drehbar angetrieben wird, wobei der Motor eine erste Anordnung (210) und eine zweite Anordnung (220) umfasst, die in Bezug aufeinander entlang einer Drehachse (300) drehbeweglich sind, wobei die Hauptluftschraube mit einer von der ersten Anordnung und der zweiten Anordnung drehfest ist, wobei das Luftfahrzeug ein Verriegelungssystem (400) umfasst, das eine Aufnahme (420, 421, 422) und ein Indexierungselement (410, 410') umfasst, wobei die Aufnahme in einer von der ersten Anordnung und der zweiten Anordnung gebildet ist, das Indexierungselement fest mit der anderen von der ersten Anordnung und der zweiten Anordnung verbunden ist, das Verriegelungssystem eine Eingriffsausgestaltung, in der das Indexierungselement zumindest teilweise in die Aufnahme eingesetzt ist, und eine freie Ausgestaltung aufweist, in der das Indexierungselement nicht zumindest teilweise in die Aufnahme eingesetzt ist, das Verriegelungssystem derart ausgestaltet ist, dass in der Eingriffsausgestaltung die Drehbewegung der ersten Anordnung in Bezug auf die zweite Anordnung auf einen vorbestimmten Winkelsektor beschränkt ist, das Verriegelungssystem derart ausgestaltet ist, dass es von der Eingriffsausgestaltung in die freie Ausgestaltung übergeht, wenn der Motor ein Drehmoment, das höher als ein Momentschwellenwert ist, auf die erste Anordnung oder auf die zweite Anordnung anwendet, **dadurch gekennzeichnet, dass** die erste Anordnung und die zweite Anordnung in Bezug aufeinander entlang einer Translationsrichtung, die durch die Drehachse definiert ist, zwischen einer Ruheposition und einer Betriebsposition translatorisch beweglich sind, und dadurch, dass das Verriegelungssystem sich nur in der Eingriffsausgestaltung befinden kann, wenn die erste Anordnung und die zweite Anordnung sich in der Ruheposition befinden.

2. Luftfahrzeug nach Anspruch 1, wobei das Indexierungselement ein Rollelement (411) umfasst, das geeignet ist, in die Aufnahme eingeführt zu werden.

3. Luftfahrzeug nach Anspruch 1 oder 2, das derart ausgestaltet ist, dass ein Schub, der bei einem Antreiben der Hauptluftschraube durch den Motor erzeugt wird, einem Übergang der ersten Anordnung und der zweiten Anordnung aus der Betriebsposition hin zu der Ruheposition entgegenwirkt.

4. Luftfahrzeug nach einem der Ansprüche 1 bis 3, wobei das Verriegelungssystem eine Rückstellungsvorrichtung (413) umfasst, die dazu neigt, das Indexierungselement in die Aufnahme einzusetzen, wenn die erste Anordnung und die zweite Anordnung sich in der Ruheposition befinden.

5. Luftfahrzeug nach Anspruch 4, wobei die Rückstellungsvorrichtung eine Stützfeder (414) zum Drücken von einem von dem Indexierungselement und der Aufnahme zueinander hin und eine Kalibrierungsschraube (415) umfasst, die mit der Stützfeder zusammenwirkt, um eine Steifigkeit der Rückstellungsvorrichtung zu verändern.

6. Luftfahrzeug nach Anspruch 4 oder 5, wobei das Indexierungselement entlang einer Einsetzungsrichtung (310), die im Wesentlichen senkrecht zur Drehachse ist, in die Aufnahme eingesetzt ist und die Rückstellungsvorrichtung dazu neigt, das Indexierungselement in die Aufnahme einzusetzen, wenn die erste Anordnung und die zweite Anordnung sich in der Ruheposition befinden.

7. Luftfahrzeug nach einem der Ansprüche 1 bis 5, wobei das Indexierungselement entlang einer Einsetzungsrichtung (310), die im Wesentlichen parallel zur Drehachse ist, in die Aufnahme eingesetzt ist, und die erste Anordnung und die zweite Anordnung die Ruheposition verlassen, wenn das Verriegelungssystem die Eingriffsausgestaltung verlässt.

8. Luftfahrzeug nach einem der Ansprüche 1 bis 7, wobei das Verriegelungssystem mehrere Aufnahmen umfasst.

9. Luftfahrzeug nach Anspruch 8, wobei das Verriegelungssystem eine Anzahl von Aufnahmen umfasst, die gleich der Anzahl der Blätter (101, 102) der Hauptluftschraube ist.

10. Luftfahrzeug nach Anspruch 8 oder 9, wobei das Verriegelungssystem eine Anzahl von Indexierungselementen umfasst, die kleiner als die Anzahl der Blätter (101, 102) der Hauptluftschraube ist.

11. Luftfahrzeug nach einem der Ansprüche 1 bis 10, wobei der vorbestimmte Winkelsektor kleiner als 5° ist.

## Claims

1. An aircraft comprising a primary propeller (100) driven in rotation by a motor (200), the motor having a first assembly (210) and a second assembly (220) movable in rotation relative to each other along an axis of rotation (300), the primary propeller being secured in rotation to one of said first assembly and second assembly, said aircraft comprising a locking system (400), comprising a housing (420, 421, 422) and an indexing element (410, 410'), the housing being formed in one among the first assembly and the second assembly, the indexing element being secured to the other among the first assembly and the second assembly, the locking system having an engaged configuration in which the indexing element is at least partially inserted into the housing, and a free configuration in which the indexing element is not at least partially inserted into the housing, the locking system being configured such that, in the engaged configuration, the rotational movement of the first assembly relative to the second assembly is limited to a predetermined angular sector, the locking system being configured so as to switch from the engaged configuration to the free configuration when the motor applies a rotational torque greater than a torque threshold value on the first assembly or on the second assembly, **characterized in that** the first assembly and the second assembly are movable in translation relative to each other along a direction of translation defined by the axis of rotation, between a rest position and a service position, and **in that** the locking system can be in the engaged configuration only when the first assembly and the second assembly are in the rest position.

2. The aircraft according to claim 1, wherein the indexing element comprises a rolling element (411) able to be introduced into the housing.

3. The aircraft according to claim 1 or 2, configured so that a thrust, generated during a driving of the primary propeller by the motor, opposes a switching of the first assembly and the second assembly from the service position to the rest position.

4. The aircraft according to any one of claims 1-3, wherein the locking system comprises a return device (413) tending to insert the indexing element into the housing when the first assembly and the second assembly are in the rest position.

5. The aircraft according to claim 4, wherein the return device comprises a support spring (414) for pushing one of the indexing element and of the housing towards the other, and a calibration screw (415) in cooperation with the support spring to modify a stiffness of the return device.

6. The aircraft according to claim 4 or 5, wherein the indexing element is inserted into the housing along a direction of insertion (310) which is substantially perpendicular to the axis of rotation, and the return device tends to insert the indexing element into the housing when the first assembly and second assembly are in the rest position.

7. The aircraft according to any one of claims 1-5, wherein the indexing element is inserted into the housing along a direction of insertion (310) which is substantially parallel to the axis of rotation, and the first assembly and the second assembly leave the rest position when the locking system leaves the engaged configuration.

8. The aircraft according to any one of claims 1-7, wherein the locking system comprises several housings.

9. The aircraft according to claim 8, wherein the locking system comprises a number of housings equal to a number of blades (101, 102) of the primary propeller.

10. The aircraft according to claim 8 or 9, wherein the locking system comprises a number of indexing elements less than a number of blades (101, 102) of the primary propeller.

11. The aircraft according to any one of claims 1 to 10, wherein the predetermined angular sector is less than 5°.
